# EUROPÄISCHE PATENTSCHRIFT

(11) **EP 4 184 148 B1**
(45) Veröffentlichungstag und Bekanntmachung des Hinweises auf die Patenterteilung: **09.07.2025**
(21) Anmeldenummer: 22201585.1
(22) Anmeldetag: 14.10.2022
(51) Int. Cl.: G01N 21/47, A01D 41/127, G01N 21/3563, G01N 21/359, G01N 21/84, A01C 23/00

(54) **SENSORANORDNUNG**
SENSOR ASSEMBLY
AGENCEMENT DE CAPTEURS

(30) Priorität: 18.11.2021 DE 102021130228
(43) Veröffentlichungstag der Anmeldung: 24.05.2023
(73) Patentinhaber: Deere & Company, Moline, IL 61265 (US)
(72) Erfinder: Failer, Florian, 68163 Mannheim (DE); Haiges, Wolfram, 68163 Mannheim (DE); Weber, Frank, 68163 Mannheim (DE); Klein, Helge, 68163 Mannheim (DE); Schade, Peter, 68163 Mannheim (DE)
(74) Vertreter: Holst, Sönke

(56) Entgegenhaltungen:
- EP-A2- 0 174 186
- EP-A2- 0 952 440
- DE-A1- 102020 205 708

## Beschreibung

Die Erfindung betrifft eine Sensoranordnung nach dem Oberbegriff des Anspruchs 1.

### Stand der Technik

Die Messung von Inhaltsstoffen mittels optischer Spektroskopie, insbesondere Nah-Infrarot-Spektroskopie, ist heute eine etablierte Technologie. Sie wird in vielen Anwendungen, beispielsweise in der Lebensmittelindustrie und in der Landwirtschaft genutzt, z.B. zur Untersuchung des Zustands auf einem Feld stehender Pflanzen, von Inhaltsstoffen geernteter Pflanzenteile oder der Zusammensetzung von Gülle (s. beispielsweise WO 01/31304 A1). Es gibt auch andere, optische Messverfahren, z.B. die Raman-Spektroskopie, bei der (landwirtschaftliche) Materialien auf Inhaltsstoffe oder andere Parameter hin untersucht werden (EP 3 437 451 A1), oder es werden Bilder des zu untersuchenden Materials mittels einer Kamera aufgenommen (EP 1 956 361 A2).

Derartige optische Sensoranordnungen werden angesichts der rauen Umgebungsbedingungen, in denen sie eingesetzt werden, in Gehäusen eingebaut. Durch ein lichtdurchlässiges Fenster gelangen elektromagnetische Wellen, seien sie im sichtbaren Wellenlängenbereich oder kurz- oder langwelliger (Ultraviolett oder (Nah-) Infrarot), von der außerhalb des Gehäuses positionierten, zu untersuchenden Probe in das Innere des Gehäuses, um dort durch Detektionselemente der Sensoranordnung empfangen zu werden. Das Fenster schützt gleichzeitig das Innere der Sensoranordnung davor, dass die Probe in das Innere gelangt und Bestandteile der Sensoranordnung verunreinigt oder zerstört. Zudem dient das Fenster auch dazu, die Probe mittels einer im Inneren des Gehäuses angeordneten Quelle für elektromagnetische Wellen zu beleuchten. Die Sensoranordnungen umfassen demnach innerhalb des Gehäuses die Detektionselemente, die Lichtquelle und das Fenster als Schnittstelle zur Probe. Das Fenster wird bei manchen Sensoranordnungen (vgl. die als gattungsbildend angesehene DE 10 2020 205 708 A1) an einem Flansch montiert, der vor einer Öffnung des Gehäuses positioniert und dort lösbar befestigt (verschraubt) wird.

Um Signale mit einem möglichst hohen Informationsgehalt von den Detektionselementen zu erhalten, ist es sinnvoll, Maßnahmen zu treffen, die es ermöglichen, dass die Detektionselemente möglichst wenig Streulicht (d.h. Licht, das keine der Messung zuträgliche Information trägt oder aus einer anderen als der für die Messung günstigen Richtung in die Detektionselemente gelangt) von der Lichtquelle oder anderen Orten erhalten. Im Stand der Technik wurde dazu vorgeschlagen, die Lichtquelle und die Detektionselemente in getrennten Gehäusen anzubringen, um getrennte Wege des Lichts von der Lichtquelle zum Fenster und vom Fenster zu den Detektionselementen bereitzustellen (WO 01/31304 A1), das Fenster zu entspiegeln (EP 1 782 046 A1), oder dem Strahlengang des Lichts von der Probe zu einem Spektrometer benachbart angeordnete, gezahnte Streulichtfallen vorzusehen, die Licht der ersten Beugungsordnung (DE 10 2014 104 204 U1) oder von einer ungewünschten Signalquelle in das Gehäuse eines Spektrometers einfallendes Licht ausfiltern sollen (US 8 717 561 B2).

Die EP 0 952 440 A2 beschreibt einen Lesekopf mit Leuchtdioden, die eine Probe ausleuchten, und das von der Probe reflektierte Licht gelangt durch einen Kanal, in dem eine ebene Wand zur Streulichtverminderung mit einer treppenstufenförmigen Verzahnung versehen ist, in einen Photodetektor.

Die EP 0 174 186 A2 zeigt ein Reflektometer mit einer Lichtquelle, einem Fenster und einem Detektor für Licht, das von der Lichtquelle durch das Fenster zu einer Probe gelangt und von der Probe zum Detektor hin reflektiert wird. Im Strahlengang des Lichts von der Lichtquelle zum Fenster und vom Fenster zum Detektor sind an konischen Wandabschnitten jeweils Verzahnungen als Lichtfallen angebracht.

### Aufgabe

Die Anbringung von Lichtquelle und Detektionselementen in getrennten Gehäusen nach WO 01/31304 A1 bedeutet, dass getrennte Rohre bis zum Fenster zu führen sind, sodass die Sensoranordnung insgesamt relativ groß wird, während die Entspiegelung des Fensters nach EP 1 782 046 A1 nur eine geringe Wirkung zeigt, solange nicht noch weitere Maßnahmen zur Reduzierung des Streulichts getroffen werden. Die DE 10 2014 104 204 U1 und US 8 717 561 B2 beziehen sich auf Spektrometer, in deren Gehäuse keine Lichtquelle angeordnet ist, sondern im ersten Fall direkt von der Probe reflektiertes oder transmittiertes Licht und im zweiten Fall aus einer nicht der zu untersuchenden Signalquelle zuzuordnenden Richtung stammendes Licht ausgefiltert werden sollen, und somit Streulicht, das von der Lichtquelle in die Detektionselemente fallen sollte, nicht ausschalten können. EP 0 952 440 A2 und EP 0 174 186 A2 offenbaren keine Vorzugsrichtung, in die Streulicht an den jeweiligen Verzahnungen reflektiert wird.

Die Erfindung hat sich zur Aufgabe gesetzt, die genannten Nachteile zu vermeiden oder zumindest zu vermindern.

### Lösung

Diese Aufgabe wird erfindungsgemäß durch die Lehre des Patentanspruchs 1 gelöst, der die vorliegende Erfindung definiert, wobei in den weiteren Patentansprüchen Merkmale aufgeführt sind, die die Lösung in vorteilhafter Weise weiterentwickeln.

Eine Sensoranordnung ist mit einem Gehäuse mit einer Öffnung, in welcher ein für elektromagnetische Wellen transparentes Fenster montiert ist, einer im Gehäuse angeordneten Lichtquelle zur Erzeugung elektromagnetischer Wellen, und einem im Gehäuse angeordneten Detektor zum Nachweis durch das Fenster einlaufender, elektromagnetischer Wellen, die von der Lichtquelle durch das Fenster auf eine dem Fenster benachbarte Probe gefallen sind und von der Probe reflektiert wurden ausgestattet. Innerhalb des Gehäuses ist eine Verzahnung angeordnet, die konfiguriert ist, von der Lichtquelle zum Detektor gelangendes Streulicht zu reduzieren. Auf diese Weise wird die Intensität des von der Lichtquelle zum Detektor gelangenden Streulichts, das nicht den Weg über die Probe zurückgelegt hat, vermindert, indem es an der Verzahnung absorbiert und/oder vom Detektor hinfort reflektiert wird.

Die Verzahnung ist an der Wand einer zwischen der Lichtquelle und dem Fenster angeordneten, ersten Kammer und an der Wand einer zwischen dem Fenster oder der ersten Kammer und dem Detektor angeordneten, zweiten Kammer angeordnet.

Die Verzahnung ist im Bereich zwischen der Lichtquelle und dem Fenster derart angeordnet, dass sie Streulicht in Richtung der Lichtquelle reflektiert. Die Verzahnung ist im Bereich zwischen dem Fenster und dem Detektor derart angeordnet, dass sie Streulicht in Richtung des Fensters reflektiert. Hierzu umfasst die Verzahnung eine Vielzahl an ringförmigen Zähnen, die jeweils eine quer zur optischen Achse der Lichtquelle oder des Detektors orientierte Fläche, welche der Lichtquelle bzw. dem Fenster zugewandt ist, und eine sich schräg nach außen erstreckende Fläche umfassen, die dem Fenster bzw. dem Detektor zugewandt ist.

Zusätzlich kann die Verzahnung an der Innenseite eines Flansches angebracht sein, der das Fenster am Gehäuse fixiert.

Die Mittelachse des Fensters kann gegenüber der Mittelachse des Flanschs versetzt und die Verzahnung konzentrisch zu einem Punkt angeordnet sein, der zumindest näherungsweise auf der optischen Achse der Lichtquelle und des Detektors liegt.

Der Detektor kann als Spektrometeranordnung, Kamera oder in beliebiger anderer Weise ausgeführt sein.

### Ausführungsbeispiel

In den Zeichnungen ist ein nachfolgend näher beschriebenes Ausführungsbeispiel der Erfindung dargestellt. Es zeigt:
- Fig. 1: eine perspektivische Ansicht einer Sensoranordnung,
- Fig. 2: einen Schnitt durch die Sensoranordnung der Figur 1,
- Fig. 3: eine perspektivische Ansicht eines Flansches mit darin eingebautem Fenster,
- Fig. 4: eine seitliche Ansicht einer landwirtschaftlichen Arbeitsmaschine in Form eines Güllefasses mit einer Sensoranordnung nach Figur 1 bis 3, und
- Fig. 5: eine seitliche Ansicht einer landwirtschaftlichen Arbeitsmaschine in Form eines Mähdreschers mit einer Sensoranordnung nach Figur 1 bis 3.

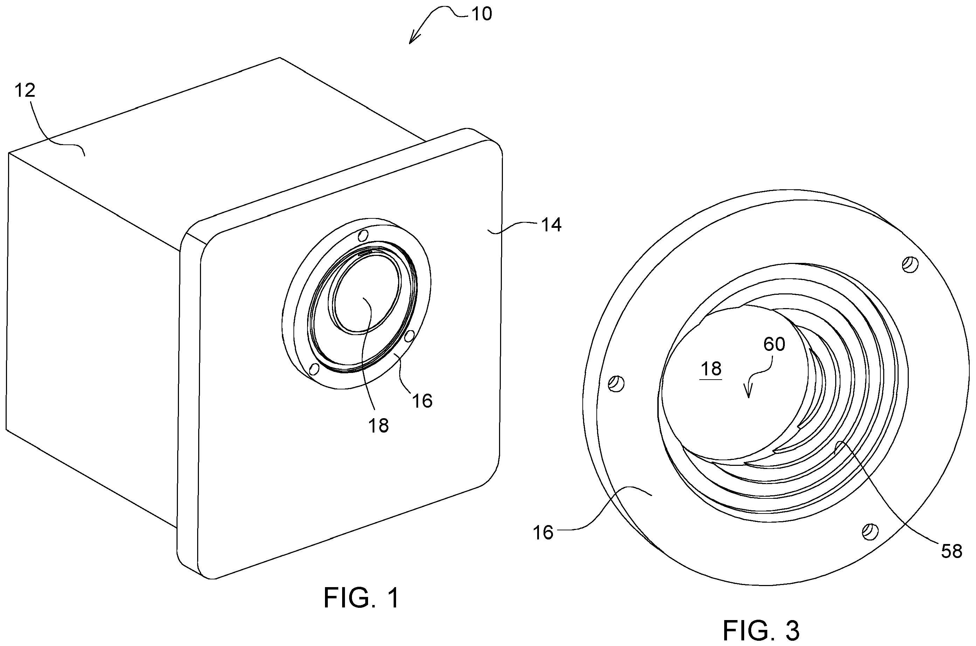

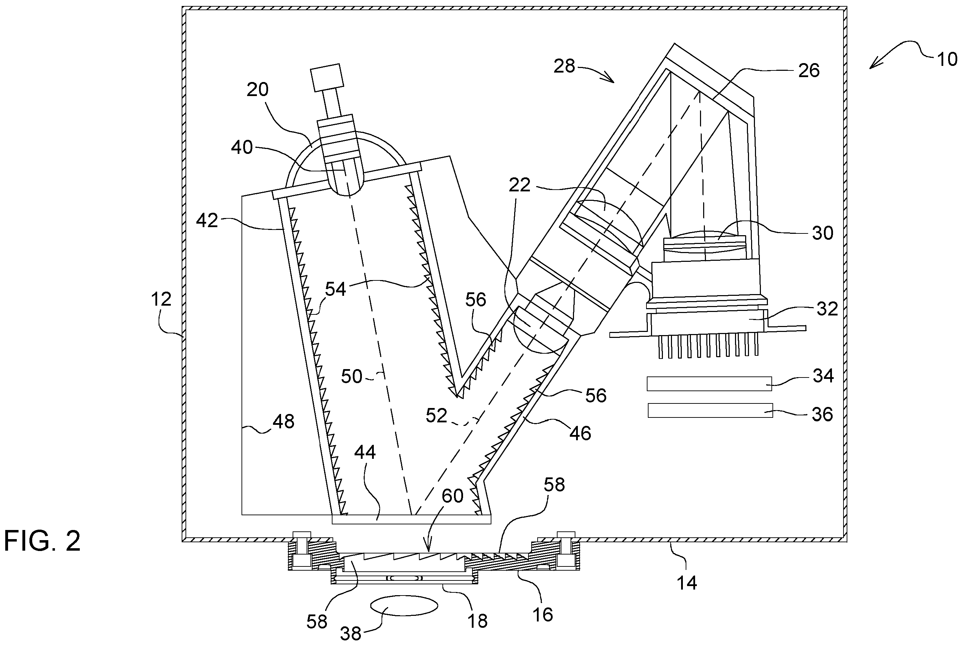

Die Figur 1 zeigt eine perspektivische Ansicht einer Sensoranordnung 10. Sie umfasst ein etwa quaderförmiges Gehäuse 12, das mit nicht gezeigten, seitlichen Kühlrippen versehen sein kann, und einer Frontplatte 14, an welcher ein Flansch 16 angebracht ist. Der Flansch 16 umrundet eine Öffnung im Gehäuse 12. Der Flansch 16 haltert ein für elektromagnetische Wellen im zu untersuchenden Wellenlängenbereich hinreichend durchlässiges Fenster 18. Das Fenster 18 ist durch eine am Flansch 16 (z.B. in der in DE 10 2020 205 708 A1 beschriebenen Weise) befestigte, kreisförmige, in sich flache Scheibe ausgeführt und dient als Durchlass für elektromagnetische Wellen, von einer Lichtquelle 40 zu einer außerhalb des Gehäuses 12 angeordneten Probe 38 und für die von der Probe 38 reflektierten Lichtwellen in das Gehäuse 12 hinein. Dort werden sie analysiert, um bestimmte Eigenschaften der Probe zu ermitteln. Die Sensoranordnung 12 kann, wie in der Figur 2 gezeigt, als Nahinfrarotspektrometer ausgeführt sein, oder ein beliebiger, anderer optischer Sensor sein, z.B. eine Kamera, ein Thermometer oder ein Raman-Spektrometer.

Die Figur 2 zeigt einen Schnitt durch die Sensoranordnung 10 der Figur 1, die sich für Erntemaschinen und andere landwirtschaftlich genutzte Maschinen eignet. Die Sensoranordnung 10 umfasst das an der Frontplatte 14 mit dem Fenster 18 versehenen Gehäuse 12, in dem eine Beleuchtungsquelle 40, eine Spektrometeranordnung 28 und ggf. ein oder mehrere nicht gezeigte Standards zur internen Rekalibrierung vorhanden sind. Im Gehäuse 12 sind zusätzlich ein Prozessor 34 zur Erfassung und Bearbeitung der Messwerte und eine Schnittstelle 36 zu einem Bussystem angeordnet. Für das Fenster 18 im Gehäuse 12, durch das sowohl die Beleuchtungsstrahlung als auch die von der Probe 38 reflektierte Strahlung fällt, wird vorzugsweise Quarz- oder Saphirglas verwendet. Saphirglas ermöglicht eine ausreichend hohe Standzeit des Fensters 18, auch bei hoch abrasiven Proben 38 (z. B. sandhaltige Proben 38). Die Lampenleistung der vorzugsweise über einen Reflektor 20 verfügenden Lichtquelle 40 kann automatisch regelbar sein, um die Spektrometeranordnung 28 an die verschiedenen Reflexionsverhalten unterschiedlichster Proben 38 anzupassen.

Die Spektrometeranordnung 28 umfasst ein Dispersionselement 26 und einen Detektor 32 mit einem oder mehreren sensitiven Elementen und verfügt gegebenenfalls über abbildende Optikbaugruppen 22, 30. Die im Gehäuse 12 vorhandene Schnittstelle 36 zu einem Bussystem ist vorzugsweise als drahtlose oder drahtgebundene Verbindung zur Datenübertragung und/oder Kalibrierung und/oder Systemdiagnose ausgeführt ist und kann Standards, wie CAN, USB, RS232, Wireless LAN u. a. unterstützen. Es ist aber auch möglich, die Verbindung von der Sensoranordnung zum Bussystem über elektrische und/oder faseroptische Leitungen herzustellen. Zusätzlich ist im Gehäuse 12 der Prozessor 34 zur Erfassung und Bearbeitung der Messwerte angeordnet. Von diesem Prozessor 34 können sowohl Rohdaten, d. h. die Vorverarbeitung der Daten auf spektraler Basis, als auch berechnete Ergebnisse erzeugt werden, die dann über die vorhandene Schnittstelle 36 zu einem Bussystem übertragen werden kann. Außerdem enthält der Prozessor 34 die Software für das notwendige Busmanagement.

In nicht erfindungsgemäßen Anordnungen wäre auch denkbar, die Spektrometeranordnung 28 mit dem Dispersionselement 26 außerhalb des Gehäuses 12 zu positionieren. In diesem Fall wird das reflektierte Licht im Gehäuse 12 von einer optischen Anordnung erfasst und der externen Spektrometeranordnung über Glasfasern zugeführt. Dann sind die weiteren Elemente wie der Prozessor 34 etc. auch extern angeordnet. Als Detektor 32 wäre dann die optische Anordnung, die das reflektierte Licht erfasst, anzusehen.

Anhand der Intensitätsverteilung der reflektierten Strahlung können basierend auf Kalibrierungen unterschiedliche Inhaltsstoffe, wie beispielsweise Feuchte, Protein, Stärke, Ölgehalt und Eigenschaften wie Schnittlänge, Faserzustand, Temperatur der Probe bestimmt werden. Mit der Sensoranordnung 10 sind sowohl statische Messungen als auch Messungen eines Materialstroms möglich. Die Sensoranordnung 10 kann an stationären Anlagen oder beliebigen Maschinen verwendet werden, bei denen das Erntegut oder eine andere Probe am Messkopf vorbeiströmt, beispielsweise in Mähdreschern oder Feldhäckslern oder Güllefässern, oder die Sensoranordnung 10 am Erntegut vorbeibewegt wird, beispielsweise an einem Schwad. Bei der Sensoranordnung 10 wird die zu messende Probe 38 mit Licht von der Lichtquelle 40 bestrahlt. Das von der Lichtquelle 40 erzeugte Licht, dessen Wellenlänge nicht notwendigerweise nur im sichtbaren Wellenlängenbereich liegen muss, sondern auch im Infraroten oder ggf. im Ultravioletten liegen kann, wird vom Reflektor 20 konzentriert und durch eine ersterohrförmige, kreiszylindrische Kammer 42, die sich von der Lichtquelle 40 bis zu einer dem Fenster 18 benachbarten Staubschutzscheibe 44 an seinem unteren Ende erstreckt, zum Fenster 18 geleitet. Die von der Probe 38 reflektierte Strahlung gelangt durch das Fenster 18 wieder in die erste Kammer 42 und von dort in eine von ersten Kammer 42 abzweigenden, zweiteebenfalls rohrförmige, kreiszylindrische Kammer 46. Am oberen Ende der zweiten Kammer 46 ist die Spektrometeranordnung 28 angeordnet. Die Kammern 42,46 sind innerhalb eines inneren Gehäuses 48 angeordnet, das zum Fenster 18 hin durch die Staubschutzscheibe 44 verschlossen ist. Es sei noch angemerkt, dass die zweite Kammer 46 nicht in die erste Kammer 42 münden muss, sondern getrennt davon angeordnet sein kann (s. WO 01/31304 A1).

Es ist erkennbar, dass die Qualität der vom Detektor(array) 32 bereitgestellten Signale umso besser ist, je höher das Verhältnis aus Nutzsignal und Untergrund ist. Ein Teil des Untergrunds wird durch Streulicht gebildet, das von der Lichtquelle 40 nach Mehrfachreflektionen an den inneren Wänden der Kammern 42 und 46 oder an der Innenseite des Flansches 58 ohne Wechselwirkung mit der Probe 38 in die Spektrometeranordnung 28 fällt.

Es werden daher vorliegend eine Reihe an Maßnahmen zur Verbesserung des Verhältnisses und Nutzsignal durch Verminderung des Streulichts getroffen. Die Staubschutzscheibe 44 ist beidseits vergütet, um unerwünschte Reflexionen zu vermeiden, was analog auch zumindest für die Innenseite des Fensters 18 gilt. Aus demselben Grunde sind auch die optische Achse 50 der Lichtquelle 40 und der ersten Kammer 42 in einem Winkel zur Ebene des Fensters 18 und der Staubschutzscheibe 44 angeordnet, der sich vom Winkel der optischen Achse 52 der Spektrometeranordnung 28 und der zweiten Kammer 46 gegenüber der Ebene des Fensters 18 unterscheidet.

Weiterhin sind die Innenwände der ersten Kammer 42 und der zweiten Kammer 46 mit Verzahnungen 54, 56 ausgestattet. Diese verhindern oder verringern zumindest die Wahrscheinlichkeit, dass von der Lichtquelle 40 erzeugtes Licht durch Reflexion an den Innenwänden der Kammem 42, 46 in die Spektrometeranordnung 28 gelangt, indem es an den Verzahnungen 54 der Innenwand der ersten Kammer 42 wieder in Richtung der Lichtquelle 40 reflektiert wird. Analog reflektieren die Verzahnungen 56 jegliches Licht, das nicht auf der optischen Achse 52 der Spektrometeranordnung 28 einläuft, wieder in Richtung des Fensters 18. Die Verzahnungen 54 sind daher so angeordnet, dass die der Lichtquelle 40 zugewandten Flächen der Verzahnungen 54 etwa radial zur optischen Achse 50 gerichtet sind, während die dem Fenster 18 zugewandten Flächen der Verzahnungen 54 schräg nach innen und axial verlaufen. Analog sind die Verzahnungen 56 so angeordnet, dass die dem Fenster 18 zugewandten Flächen der Verzahnungen 56 etwa radial zur optischen Achse 52 gerichtet sind, während die der Spektrometeranordnung 28 zugewandten Flächen der Verzahnungen 56 schräg nach innen und axial verlaufen. Die Verzahnungen 54, 56 können in an sich bekannter Weise geschwärzt und/oder mattiert sein.

Mit anderen Worten sorgen die Verzahnungen 54, 65 dafür, dass auftreffendes Licht stets in eine Richtung reflektiert wird, die den Weg zum Detektor 32 sozusagen weiter macht. Zudem wird ein Teil des Lichts an der Verzahnung 54, 56 absorbiert. Daher muss das Streulicht deutlich mehr Reflexionen durchführen, bis es beim Detektor 32 ankommt. Da bei jeder Reflexion aufgrund der Mattierung Licht verloren geht oder das Streulicht wieder zur zurückgeworfen wird, sinkt insgesamt die Intensität des Streulichts, das beim Detektor 32 ankommt.

Eine weitere Quelle möglicher störender Reflexionen ist die Innenseite des Flansches 16. Da das Fenster 18 einen kleineren Durchmesser als der Flansch 16 aufweist, werden von der Lichtquelle 40 nicht nur das eigentliche Fenster 18, sondern auch die dem Fenster 18 benachbarten Flächen des Flansches 16 beleuchtet. Um von dort ausgehende Reflexionen in die Spektrometeranordnung 28 zu verhindern oder zumindest zu vermindern, ist auch dort eine Verzahnung 58 vorgesehen. Auch dort sind die der Lichtquelle 40 bzw. der Spektrometeranordnung 28 zugewandten Flächen der Verzahnung 58 quer zur Ebene des Fensters 18 ausgerichtet und die radial nach außen folgenden Flächen nach außen und unten hin geneigt. Dadurch erreicht man, dass an diesen Flächen möglichst wenig Licht von der Lichtquelle 40 direkt in die Spektrometeranordnung 28 reflektiert wird.

Wie anhand der Figur 3 erkennbar, ist das Fenster 18 nicht genau mittig im Flansch 16 angeordnet. Die Verzahnung 58 des Flansches 16 ist daher nicht konzentrisch um die Mitte des Fensters 18, sondern um einen Punkt 60 herum, der etwa dort liegt, wo die optischen Achsen 50, 52 das Fenster 18 schneiden.

Es sei noch angemerkt, dass die Dimensionierung und Positionierung der Verzahnungen 54, 56, 58 durch eine Simulationsrechnung erfolgen kann, indem unterschiedliche Abmessungen und Positionen durchprobiert und die zur geringsten Streulichtintensität in der Spektrometeranordnung 28 führende Konfiguration übernommen wird.

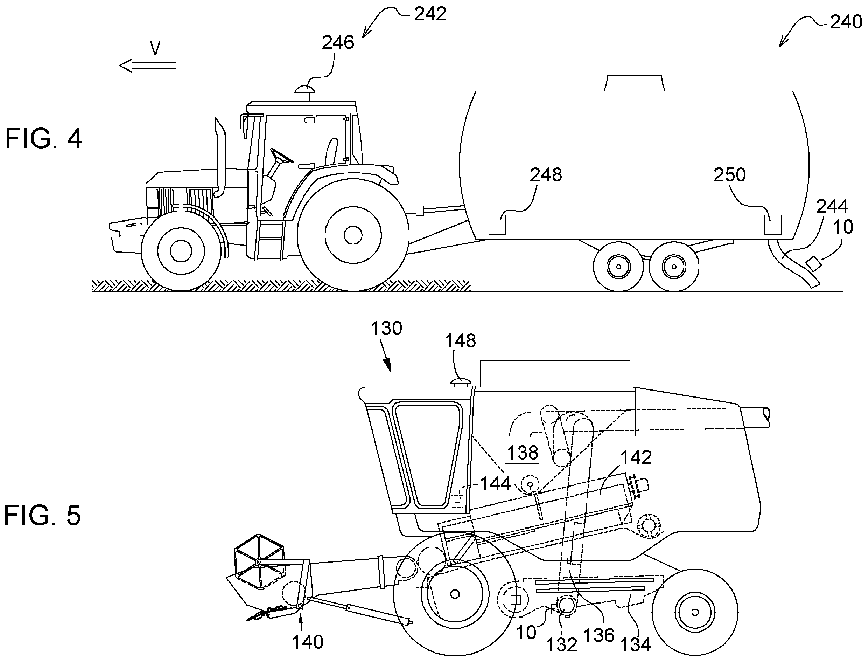

In der Figur 5 ist eine landwirtschaftliche Arbeitsmaschine 240 in Form eines Güllefasses dargestellt, das durch einen Ackerschlepper 242 über ein Feld gezogen wird, um Gülle durch eine Leitung 244 auf ein Feld auszubringen. Das Ausgangssignal der Sensoranordnung 10, die mit der in der Leitung 244 fließenden Gülle zusammenwirkt, wird einer Steuerung 248 zugeführt, die zudem mit einem Positionsbestimmungssystem 246 verbunden ist. Die Steuerung 248 kontrolliert ein Ventil 250, das die Flussrate der Gülle durch die Leitung 244 vorgibt, basierend auf einer in der Steuerung 248 im vorab abgespeicherten Ausbringkarte, in welcher festgelegt wird, wieviel Inhaltstoff (z.B. Stickstoff, Kalium etc.) je Flächeneinheit ausgebracht werden soll, und anhand des Ausgangssignals im Sinne einer Einhaltung der in der Ausbringkarte festgelegten Werte.

Die Figur 6 zeigt eine weitere Ausführungsform einer Arbeitsmaschine 130 in Form eines selbstfahrenden Mähdreschers 130, die mit einer Sensoranordnung 10 ausgestattet ist. Die Sensoranordnung 10 ist an der Wand einer Querförderschnecke 132 angebracht und wirkt durch eine Öffnung in der Wand mit dem gereinigten Erntegut (Körnern) zusammen, das von einer Reinigungseinrichtung 134 abgegeben und durch die Querförderschnecke 132 einem Körnerelevator 136 übergeben wird, der es in einem Korntank 138 ablegt. Die Reinigungseinrichtung 134 erhält das Erntegut von einer Erntegutaufnahmeeinrichtung 140, die es einer Dresch- und Trenneinheit 142 zuführt. Die Sensoranordnung 10 liefert bestimmte Inhaltsstoffangaben wie Proteingehalt, Stärkegehalt, Ölgehalt und Feuchtigkeitsanteil des geernteten Korns, die durch eine Kontrolleinheit 144 gemeinsam mit einer Positionsinformation, die von einer Empfangsantenne 148 eines satellitenbasierten Positionsbestimmungssystems bereitgestellt wird, in einer Karte abgespeichert werden.

## Patentansprüche

1. Sensoranordnung (10), mit:
einem Gehäuse (12) mit einer Öffnung, in welcher ein für elektromagnetische Wellen transparentes Fenster (18) montiert ist,
einer im Gehäuse (12) angeordneten Lichtquelle (40) zur Erzeugung elektromagnetischer Wellen,
und einem im Gehäuse (12) angeordneten Detektor (32) zum Nachweis durch das Fenster (18) einlaufender, elektromagnetischer Wellen, die von der Lichtquelle durch das Fenster (18) auf eine dem Fenster (18) benachbarte Probe gefallen sind und von der Probe reflektiert wurden,
wobei eine erste, kreiszylindrische Kammer (42) zwischen der Lichtquelle (40) und dem Fenster (18) und eine zweite, kreiszylindrische Kammer (46) zwischen dem Fenster (18) oder der ersten Kammer (42) einerseits und dem Detektor (32) andererseits angeordnet ist,
**dadurch gekennzeichnet, dass** innerhalb des Gehäuses (12) an der Wand der ersten Kammer (42) und an der Wand der zweiten Kammer (46) jeweils eine Verzahnung (54, 56) angeordnet ist, die konfiguriert ist, von der Lichtquelle (40) zum Detektor (32) gelangendes Streulicht zu reduzieren,
dass die Verzahnung (54) der ersten Kammer (42) derart angeordnet ist, dass sie Streulicht in Richtung der Lichtquelle (40) reflektiert, wozu die Verzahnung (54) der ersten Kammer (42) eine Vielzahl an ringförmigen Zähnen mit quer zur optischen Achse (50) der Lichtquelle (40) orientierten Flächen, welche der Lichtquelle (40) zugewandt sind, und sich schräg nach außen erstreckenden Flächen umfasst, die dem Fenster (18) zugewandt sind,
und dass die Verzahnung (56) der zweiten Kammer (46) derart angeordnet ist, dass sie Streulicht in Richtung des Fensters (18) reflektiert, wozu die Verzahnung (56) der zweiten Kammer (46) eine Vielzahl an ringförmigen Zähnen mit quer zur optischen Achse (52) des Detektors (32) orientierten Flächen, welche dem Fenster (18) zugewandt sind, und sich schräg nach außen erstreckenden Flächen umfasst, die dem Detektor (32) zugewandt sind.

2. Sensoranordnung nach Anspruch 1, wobei eine Verzahnung (58) an der Innenseite eines Flansches (16) angebracht ist, der das Fenster (18) am Gehäuse (12) fixiert.

3. Sensoranordnung (10) nach Anspruch 2, wobei die Mittelachse des Fensters (18) gegenüber der Mittelachse des Flanschs (16) versetzt und die Verzahnung (58) des Flansches (16) konzentrisch zu einem Punkt (60) angeordnet ist, der zumindest näherungsweise auf der optischen Achse (50, 52) der Lichtquelle (40) und des Detektors (32) liegt.

4. Sensoranordnung (10) nach einem der Ansprüche 1 bis 3, wobei der Detektor (32) eine Spektrometeranordnung (28) und/oder eine Kamera umfasst.

5. Landwirtschaftliche Arbeitsmaschine (130, 240) mit einer Sensoranordnung (10) nach einem der vorhergehenden Ansprüche.

## Claims

1. Sensor arrangement (10) with:
a housing (12) with an opening in which a window (18) transparent to electromagnetic waves is mounted,
a light source (40), arranged in the housing (12), for generating electromagnetic waves,
and a detector (32), arranged in the housing (12), for detecting electromagnetic waves coming in through the window (18), which have fallen from the light source through the window (18) onto a sample adjacent to the window (18) and have been reflected by the sample,
wherein a first, circular-cylindrical chamber (42) is arranged between the light source (40) and the window (18) and a second, circular-cylindrical chamber (46) is arranged between the window (18) or the first chamber (42) and the detector (32),
**characterized in that** within the housing (12) on the wall of the first chamber (42) and on the wall of the second chamber (46) a toothing (54, 56) is arranged in each case, which is configured to reduce stray light travelling from the light source (40) to the detector (32),
**in that** the toothing (54) of the first chamber (42) is arranged in such a way that it reflects stray light in the direction of the light source (40), for which purpose the toothing (54) of the first chamber (42) comprises a multiplicity of annular teeth with surfaces which are oriented transversely to the optical axis (50) of the light source (40) and face the light source (40), and surfaces which extend obliquely outward and face the window (18),
and **in that** the toothing (56) of the second chamber (46) is arranged in such a way that it reflects stray light in the direction of the window (18), for which purpose the toothing (56) of the second chamber (46) comprises a multiplicity of annular teeth with surfaces which are oriented transversely to the optical axis (52) of the detector (32) and face the window (18), and surfaces which extend obliquely outward and face the detector (32) .

2. Sensor arrangement according to Claim 1, wherein a toothing (58) is attached to the inside of a flange (16) which fixes the window (18) to the housing (12).

3. Sensor arrangement (10) according to Claim 2, wherein the centre axis of the window (18) is offset from the centre axis of the flange (16) and the toothing (58) of the flange (16) is arranged concentrically to a point (60), which at least approximately lies on the optical axis (50, 52) of the light source (40) and the detector (32).

4. Sensor arrangement (10) according to any of Claims 1 to 3, wherein the detector (32) comprises a spectrometer arrangement (28) and/or a camera.

5. Agricultural work machine (130, 240) with a sensor arrangement (10) according to any of the preceding claims.

## Revendications

1. Agencement de capteurs (10), comprenant :
un boîtier (12) doté d'une ouverture dans laquelle est montée une fenêtre (18) transparente aux ondes électromagnétiques,
une source lumineuse (40) disposée dans le boîtier (12) pour générer des ondes électromagnétiques,
et un détecteur (32) disposé dans le boîtier (12) pour détecter les ondes électromagnétiques pénétrant par la fenêtre (18), qui ont été émises par la source lumineuse à travers la fenêtre (18) vers un échantillon adjacent à la fenêtre (18) et réfléchies par l'échantillon,
une première chambre cylindrique circulaire (42) étant disposée entre la source lumineuse (40) et la fenêtre (18), et une seconde chambre cylindrique circulaire (46) étant disposée entre la fenêtre (18) ou la première chambre (42), d'une part, et le détecteur (32), d'autre part,
**caractérisé en ce que**, à l'intérieur du boîtier (12), une dentelure (54, 56) est disposée respectivement sur la paroi de la première chambre (42) et sur la paroi de la seconde chambre (46), laquelle denture est configurée pour réduire la lumière diffusée allant de la source lumineuse (40) au détecteur (32),
**en ce que** la denture (54) de la première chambre (42) est disposée de manière à réfléchir la lumière diffusée en direction de la source lumineuse (40), la denture (54) de la première chambre (42) comprenant à cet effet une pluralité de dents annulaires ayant des surfaces orientées transversalement à l'axe optique (50) de la source lumineuse (40), tournées vers la source lumineuse (40), et des surfaces s'étendant obliquement vers l'extérieur, tournées vers la fenêtre (18),
et **en ce que** la denture (56) de la première chambre (46) est disposée de manière à réfléchir la lumière diffusée en direction de la fenêtre (18), la denture (56) de la seconde chambre (46) comprenant à cet effet une pluralité de dents annulaires ayant des surfaces orientées transversalement à l'axe optique (52) du détecteur (32), tournées vers la fenêtre (18), et des surfaces s'étendant obliquement vers l'extérieur, tournées vers le détecteur (32) .

2. Agencement de capteurs selon la revendication 1, dans lequel une denture (58) est montée sur la face intérieure d'une bride (16) qui fixe la fenêtre (18) au boîtier (12).

3. Agencement de capteurs (10) selon la revendication 2, dans lequel l'axe central de la fenêtre (18) est décalé par rapport à l'axe central de la bride (16) et la denture (58) de la bride (16) est disposée de manière concentrique par rapport à un point (60) qui se situe au moins approximativement sur l'axe optique (50, 52) de la source lumineuse (40) et du détecteur (32).

4. Agencement de capteurs (10) selon l'une quelconque des revendications 1 à 3, dans lequel le détecteur (32) comprend un agencement de spectromètre (28) et/ou une caméra.

5. Machine de travail agricole (130, 240) équipée d'un agencement de capteurs (10) selon l'une quelconque des revendications précédentes.
